# EUROPEAN PATENT SPECIFICATION

(11) **EP 4 385 683 B1**
(45) Date of publication and mention of the grant of the patent: **18.06.2025**
(21) Application number: 23214512.8
(22) Date of filing: 06.12.2023
(51) Int. Cl.: B25J 15/06

(54) **SUCTION PAD**
SAUGKISSEN
TAMPON D'ASPIRATION

(30) Priority: 12.12.2022 JP 2022197658
(43) Date of publication of application: 19.06.2024
(73) Proprietor: SMC Corporation, Tokyo 104-0031 (JP)
(72) Inventor: ITO, Toshinori, Ibaraki, 300-2493 (JP); YAMAMOTO, Shuhei, Ibaraki, 300-2493 (JP)
(74) Representative: Keil & Schaafhausen Patentanwälte PartGmbB

(56) References cited:
- JP-A- 2004 034 195
- JP-A- 2011 073 344
- KR-B1- 102 409 288
- US-A1- 2016 257 503
- US-A1- 2021 331 331
- US-A1- 2022 314 461

## Description

### BACKGROUND OF THE INVENTION

### FIELD OF THE INVENTION

The present invention relates to a suction pad for sucking a workpiece using vacuum pressure.

### DESCRIPTION OF THE RELATED ART

Conventionally, there is known a suction pad in which an elastic member made of a material such as rubber is brought into contact with a workpiece and the workpiece is sucked by using vacuum pressure inside the elastic member. Since the elastic member is brought into contact with the workpiece, adhesion to the surface of the workpiece is enhanced, and an impact at the time of contact can be reduced.

JP 2011-073344 A describes an apparatus for taking out a resin molded article by a chuck formed of a base portion having rigidity, and a contact portion having elasticity. The contact portion includes an outer frame contact part in contact with the edge portion of the resin molded article, and an inner contact part divided into a plurality of regions by vacuum grooves. The base portion includes a vacuum suction passage connected to a vacuum pump, and the vacuum suction passage communicates with the vacuum grooves of the contact portion. In this document, as the material of the contact portion, a rubber material is mentioned, and in addition, a material having open cells, closed cells, or semi-closed cells is mentioned.

Since a material having open cells has low airtightness, it is difficult to obtain a necessary vacuum pressure in a case where a member of a suction pad (hereinafter referred to as a "contact member") in contact with a workpiece is made of a material having only open cells. A material having closed cells has high airtightness, but has high rigidity. Therefore, in a case where the contact member is made of a material having only closed cells, the material is not suitable for sucking a workpiece having irregularities on the surface thereof.

On the other hand, in a case where the contact member is made of a material in which open cells and closed cells are mixed (a material having a semi-open and semi-closed cell structure), flexibility and airtightness necessary for sucking the workpiece can be obtained. When the contact member is compressed, flexibility is exhibited until the volume of the open cells is reduced and the air permeability is lost. Therefore, the contact member is deformed in accordance with the surface shape of the workpiece. Since airtightness is exhibited after the air permeability due to the open cells is lost, vacuum pressure necessary for sucking the workpiece is obtained.

As the art related to the present invention, US 2022/0314461 A1, US 2021/0331331 A1, and JP 2011-073344 A can be listed.

US 2022/0314461 A1 discloses a soft grip head including a suction pad with a plurality of suction cells, and flexible supporting part formed of a coil spring disposed in the space inside of each of the suction cells. The suction pad is divided by flexible sidewalls, to form the plurality of the suction cells. An inlet formed at the lower end of the suction pad makes contact with a workpiece. The shape of a part of the inlet is freely changed to follow the shape of the surface of the workpiece when tightly attached to the workpiece.

US 2021/0331331 A1 discloses a suction gripper head reduced its weight by using a foam body. A soleplate for coming directly into contact with a workpiece is secured to the body. The soleplate is also made of foam with a plurality of cells. The foam of the body could be based on or made of a material that has a cellular structure with cells that may be closed, semi-open, open.

JP 2011-073344 A discloses a resin molding takeoff device having a chuck, a vacuum pump, a heater and an arm. A contact portion of the chuck is preferably made of heat-resistant urethane, silicone rubber, fluorine rubber, and preferably made of a material having interconnected cells, closed cells or semi-closed cells.

### SUMMARY OF THE INVENTION

However, when the workpiece sucking operation and the workpiece releasing operation are repeatedly performed by the contact member made of the material having a semi-open and semi-closed cell structure, the closed cells gradually collapse. As the collapse of the closed cells progresses, the contact member eventually becomes equivalent to a material having only open cells. That is, there is a problem in that the contact member reaches the end of its life in a short period of time.

In addition, when a workpiece having high air permeability such as a corrugated board is sucked by using the contact member made of the material having a semi-open and semi-closed cell structure, the vacuum pressure for sucking the workpiece cannot be sufficiently increased, and the posture of the workpiece becomes unstable. Therefore, there is a possibility that the workpiece largely swings and drops.

The present invention has the object of solving the aforementioned problem.

This problem is solved by the suction pad according to claim 1. Preferred embodiments of the invention are evident from the dependent claims.

In the suction pad according to the present invention, since the stopper for preventing the sponge member from being compressed to the maximum compression amount is disposed in each cavity of the sponge member, the life of the sponge member made of a material having a semi-open and semi-closed cell structure is improved. In addition, when the workpiece having high air permeability is sucked and conveyed, even if acceleration acts on the workpiece, the workpiece abuts against the stopper, thereby suppressing the swing of the workpiece.

The above and other objects, features, and advantages of the present invention will become more apparent from the following description when taken in conjunction with the accompanying drawings, in which a preferred embodiment of the present invention is shown by way of illustrative example.

### BRIEF DESCRIPTION OF THE DRAWINGS

FIG. 1 is an external view of a suction pad according to a first embodiment of the present invention;
FIG. 2 is a view schematically showing a cross section of the suction pad of FIG. 1;
FIG. 3 is a view schematically showing a state where a workpiece having low air permeability is sucked by the suction pad of FIG. 1;
FIG. 4 is a view schematically showing a state where a workpiece having high air permeability is sucked by the suction pad of FIG. 1;
FIG. 5 is a view schematically showing a state where the inclination of an outer peripheral portion of a sponge member is suppressed in the suction pad of FIG. 1;
FIG. 6 is a view schematically showing a state where the outer peripheral portion of the sponge member is inclined when the suction pad is not provided with stoppers;
FIG. 7 is a view schematically showing a cross section of a suction pad according to a second embodiment of the present invention; and
FIG. 8 is an enlarged view of a portion A of FIG. 7.

### DETAILED DESCRIPTION OF THE INVENTION

### (First Embodiment)

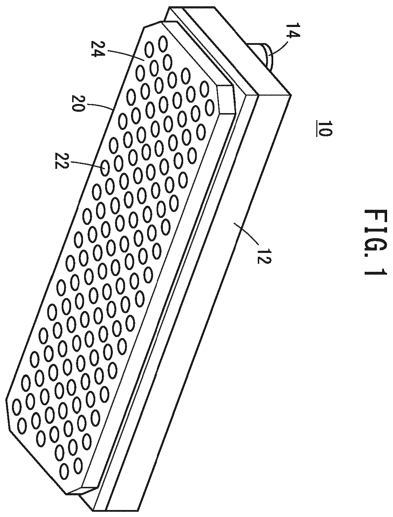

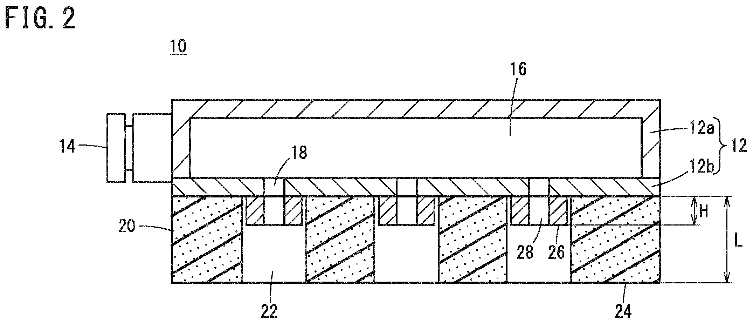

A suction pad 10 according to a first embodiment of the present invention will be described with reference to FIGS. 1 to 6. As shown in FIGS. 1 and 2, the suction pad 10 includes a body 12, a sponge member 20, and a plurality of stoppers 26. In the following description, when terms in relation to upper and lower directions are used, such terms refer to the directions shown in the drawings, however, the actual arrangement of the respective constituent members is not limited thereby.

The body 12 is formed of a main body 12a that has a box shape and opens downward, and a plate 12b that covers the main body 12a from below. The main body 12a includes a suction port 14 connected to a vacuum generating device (not shown). The body 12 includes therein a negative pressure chamber 16 communicating with the suction port 14. The plate 12b includes a plurality of holes 18 communicating with the negative pressure chamber 16. In FIG. 2, the suction port 14 is shown to be located on the lateral side of the body 12 for the sake of convenience.

The sponge member 20 having a plate shape is attached to a lower surface of the plate 12b by means of bonding or the like. The sponge member 20 is made of a material having a semi-open and semi-closed cell structure, and is manufactured by foam-molding ethylene propylene rubber (EPDM), for example. The sponge member 20 includes a plurality of cavities 22 opening toward a workpiece. The cavities 22 of the sponge member 20 are formed at positions corresponding to the holes 18 of the body 12. The sponge member 20 comes into contact with the workpiece at a lower surface 24 thereof.

The thickness of the sponge member 20 when no vertical compressive force is applied to the sponge member 20 is represented by T0, and the thickness of the sponge member 20 when a vertical compressive force is applied to the sponge member 20 is represented by T. Then, a compression amount (%) of the sponge member 20 is defined as (T0 - T)/T0 × 100. Although depending on the ratio of open cells and closed cells, the sponge member 20 exhibits sufficient airtightness when compressed to a compression amount of at least about 70 %, for example.

Further, although depending on the ratio of the open cells and the closed cells, when the sponge member 20 is compressed to a compression amount of about 90 %, for example, the flexibility due to the open cells is lost and the rigidity is rapidly increased. The compression amount at which the sponge member 20 loses flexibility is hereinafter referred to as a "maximum compression amount". When the sponge member 20 is repeatedly compressed to the maximum compression amount and released, the collapse of the closed cells progresses, and eventually the sponge member 20 ceases to exhibit airtightness.

Each of the stoppers 26 having a tubular shape is attached to the lower surface of the plate 12b and is disposed in the cavity 22 of the sponge member 20. The stopper 26 has a certain degree of elasticity so as to weaken an impact when colliding with the workpiece, and is made of, for example, a rubber material. The stoppers 26 each include a suction passage 28 penetrating the stopper 26 in the height direction (vertical direction) thereof, and the suction passage 28 communicates with the negative pressure chamber 16 via the hole 18 of the body 12.

The stopper 26 acts to limit the compression amount of the sponge member 20 so that the sponge member 20 is not compressed to the maximum compression amount. A height (axial length) H of the stopper 26 is set to a dimension that prevents the sponge member 20 from being compressed to the maximum compression amount. In addition, the height H of the stopper 26 is set to a dimension that allows the sponge member 20 to be compressed until the sponge member 20 exhibits high airtightness.

In a state where no compressive force acts on the sponge member 20, the height H of the stopper 26 is preferably set to be about 13 % to 35 % of a length L of the cavity 22 of the sponge member 20, for example. If the height H of the stopper 26 is too small with respect to the length L of the cavity 22 of the sponge member 20, the compression amount of the sponge member 20 becomes excessively large, and there is a possibility that the collapse of the closed cells progresses to shorten the life of the sponge member 20. If the height H of the stopper 26 is too large with respect to the length L of the cavity 22 of the sponge member 20, there is a possibility that sufficient airtightness cannot be obtained.

The workpiece can be steadily (stably) held by the suction pad 10 in a state of being in abutment against the stoppers 26 or in a state of not being in abutment against the stoppers 26. Whether the workpiece is held by the suction pad 10 in a state of being in abutment against the stoppers 26 or the workpiece is held by the suction pad 10 in a state of not being in abutment against the stoppers 26 greatly depends on the air permeability of the workpiece and a weight of the workpiece. Hereinafter, the force acting on the workpiece when the workpiece is steadily held by the suction pad 10 will be considered.

A total negative pressure ΔP generated in the suction passages 28 (a difference between the atmospheric pressure and the pressure in the suction passages 28) depends on the air permeability of the workpiece. The negative pressure ΔP generated in the suction passages 28 increases as the air permeability of the workpiece decreases. The workpiece is lifted upward by the negative pressure ΔP generated in the suction passages 28. In a state where the workpiece is in abutment against the stoppers 26, the force for lifting the workpiece upward (hereinafter referred to as a "lifting force") is represented by ΔP·S1, where S1 represents a total opening area of the suction passages 28 of the stoppers 26.

In a state where the workpiece is not in abutment against the stoppers 26, the lifting force is represented by ΔP·S2, where S2 represents a total opening area of the cavities 22 of the sponge member 20. Since the opening area S2 of the cavities 22 of the sponge member 20 is larger than the opening area S1 of the suction passages 28 of the stoppers 26, the lifting force in a state where the workpiece is not in abutment against the stoppers 26 is larger than the lifting force in a state where the workpiece is in abutment against the stoppers 26. An upward force acting on the workpiece is only the lifting force.

A downward force acting on the workpiece includes, in addition to the weight of the workpiece and a repulsive force caused by the compression of the sponge member 20, a repulsive force caused by the deformation of the stoppers 26 when the workpiece is in abutment against the stoppers 26. In a state where the workpiece is in abutment against the stoppers 26, the downward force acting on the workpiece is represented by (w + F1 + F2), where w represents the weight of the workpiece, F1 represents a repulsive force of the sponge member 20, and F2 represents a total repulsive force of the stoppers 26.

In a state where the workpiece is not in abutment against the stoppers 26, the downward force acting on the workpiece is represented by (w + F1'), where w represents the weight of the workpiece and F1' is a repulsive force of the sponge member 20. Since the amount by which the sponge member 20 is compressed in a state where the workpiece is not in abutment against the stoppers 26 is smaller than the amount by which the sponge member 20 is compressed in a state where the workpiece is in abutment against the stoppers 26, F1' is smaller than F1.

In a case where the workpiece is stably held in a state of being in abutment against the stoppers 26, ΔP·S1 = w + F1 + F2 (Formula 1) is established. In a case where the workpiece is stably held in a state of not being in abutment against the stoppers 26, ΔP·S2 = w + F1' (Formula 2) is established. As described above, ΔP depends on the air permeability of the workpiece, S2 is larger than S1, and F1' is smaller than F1. F1 and F1' change according to the compression amount of the sponge member 20, and F2 changes according to the deformation amount of the stoppers 26.

In a case where the air permeability of the workpiece is low and the negative pressure ΔP generated in the suction passages 28 of the stoppers 26 is high, if the weight w of the workpiece is not excessively large, Formula 1 is established and the workpiece is stably held in a state of being in abutment against the stoppers 26. In a case where the air permeability of the workpiece is high and the negative pressure ΔP generated in the suction passages 28 of the stoppers 26 is low, if the weight w of the workpiece is not excessively large, Formula 2 is established and the workpiece is stably held in a state of not being in abutment against the stoppers 26.

Since the lifting force rapidly changes before and after the workpiece is displaced upward and abuts against the stoppers 26, the workpiece may not be stably held. That is, the following phenomenon is repeated: when the workpiece is lifted and abuts against the stoppers 26, the lifting force is suddenly reduced and the workpiece is separated from the stoppers 26, and when the workpiece is separated from the stoppers 26, the lifting force is suddenly increased and the workpiece is lifted and abuts against the stoppers 26. This phenomenon can be described as a state where the workpiece is held at a position separated from the stoppers 26 by a minute gap.

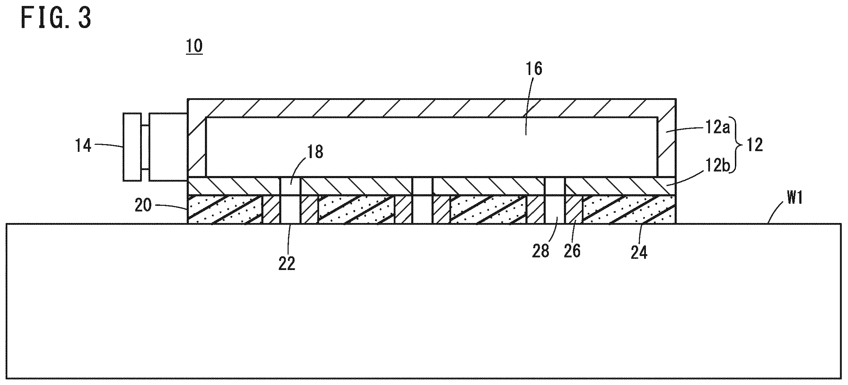

FIG. 3 shows a state where a workpiece W1 having low air permeability is sucked and held by the suction pad 10. Since the negative pressure ΔP generated in the suction passages 28 of the stoppers 26 is high and the lifting force is large, the workpiece W1 is stably held in a state of being abutment against the stoppers 26. In the present embodiment, the compression amount of the sponge member 20 is 70 % or more. The sponge member 20 is compressed to such an extent that sufficient airtightness can be exhibited. Further, since the sponge member 20 is not compressed to the maximum compression amount, the life of the sponge member 20 is improved.

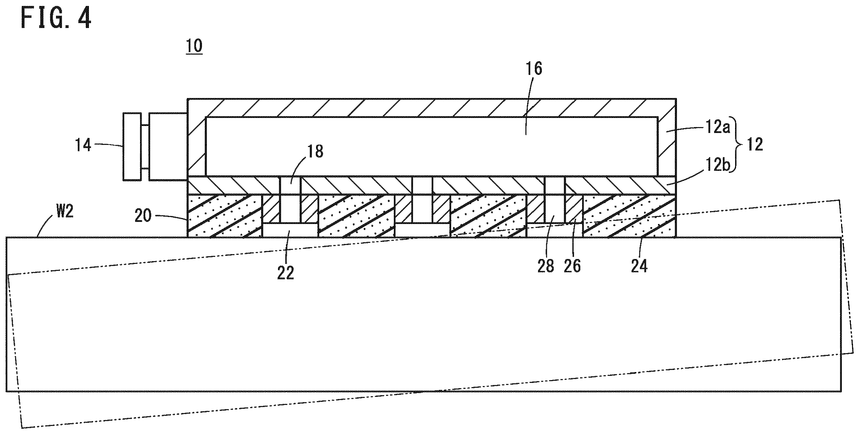

FIG. 4 shows a state where a workpiece W2 having high air permeability such as a corrugated board is sucked and held by the suction pad 10. Since the negative pressure ΔP generated in the suction passages 28 of the stoppers 26 is low and the lifting force is small, the upward force and the downward force acting on the workpiece W2 are balanced in a state where the compression amount of the sponge member 20 is small. Therefore, the workpiece W2 is held in a state of not being in abutment against the stoppers 26.

As described above, when conveying the workpiece W2 that is sucked and held in a state where the compression amount of the sponge member 20 is small, if acceleration acts on the workpiece W2, the workpiece W2 tries to swing. However, as shown by a two dot chain line in FIG. 4, the inclination of the workpiece W2 is suppressed to be small by abutment of the workpiece W2 against the stopper 26. Therefore, the swing of the workpiece W2 is suppressed, and the workpiece W2 is prevented from dropping.

Since the sponge member 20 exhibits flexibility even when the compression amount thereof is small, the sponge member 20 is deformed in accordance with the surface shape of the workpiece W2 even if the workpiece W2 has irregularities on its surface as in the case of a cardboard box in which beverage containers are packaged. Therefore, no gap is formed between the lower surface 24 of the sponge member 20 and the workpiece W2, and the airtightness is prevented from being lowered.

Incidentally, when the sponge member 20 is compressed, there is a possibility that an outer peripheral portion thereof that is in contact with the atmosphere is deformed so as to be inclined inward. When the outer peripheral portion of the sponge member 20 is largely inclined inward, a gap is formed between the lower surface 24 of the sponge member 20 and the surface of the workpiece at that inclined portion, and one or some of the plurality of cavities 22 communicate with the atmosphere, thereby reducing airtightness. The stoppers 26 also function to suppress the inclination of the outer peripheral portion of the sponge member 20.

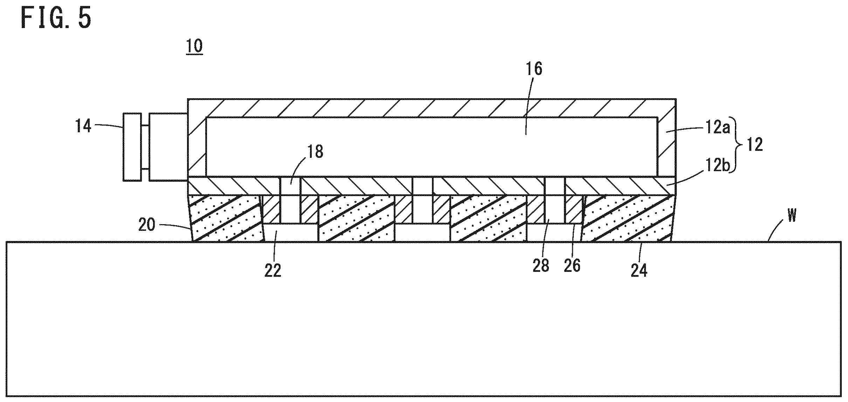

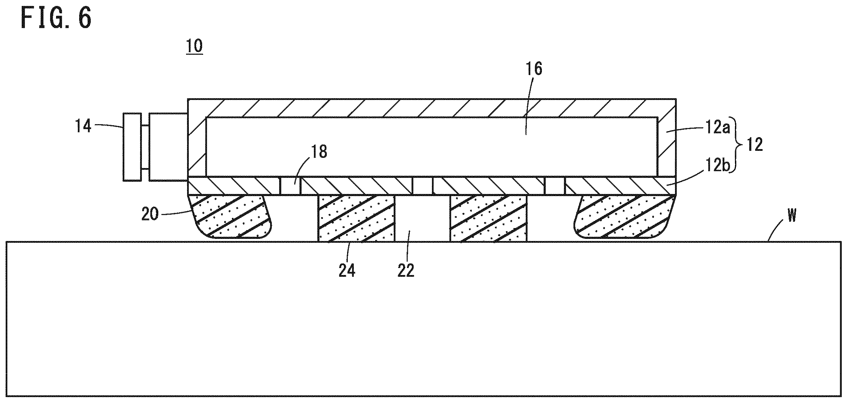

FIG. 6 shows a state where the outer peripheral portion of the sponge member 20 is largely inclined when the stoppers 26 are not present. Depending on the location, there is a gap between the outer peripheral portion of the sponge member 20 and the workpiece W. On the other hand, when the stoppers 26 are present, inward inclination of the outer peripheral portion of the sponge member 20 is suppressed as shown in FIG. 5. The effect of suppressing the inclination of the outer peripheral portion of the sponge member 20 increases as the difference between the outer diameter of each stopper 26 and the inner diameter of each cavity 22 of the sponge member 20 decreases.

When the sponge member 20 is compressed, the inner diameter of the cavity 22 is reduced. In order not to affect the compression of the sponge member 20, it is necessary that the inner diameter of the cavity 22 when no compressive force acts on the sponge member 20 is set to be larger than the outer diameter of the stopper 26. Accordingly, the outer diameter of the stopper 26 is preferably about 80 % to 90 % of the inner diameter of the cavity 22, for example. The outer diameter of the stopper 26 disposed on the outer peripheral portion of the sponge member 20 may be larger than the outer diameter of the other stoppers 26.

In the suction pad 10 according to the present embodiment, the stoppers 26 that prevent the sponge member 20 from being compressed to the maximum compression amount are disposed in the cavities 22 of the sponge member 20. Therefore, the life of the sponge member 20 made of a material having a semi-open and semi-closed cell structure is improved. Further, when the workpiece having high air permeability is sucked and conveyed, even if acceleration acts on the workpiece, the workpiece abuts against the stopper 26, thereby suppressing the swing of the workpiece.

### (Second Embodiment)

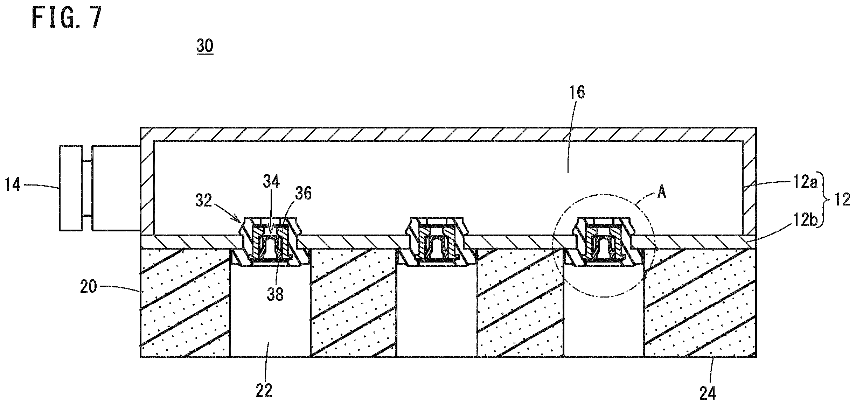

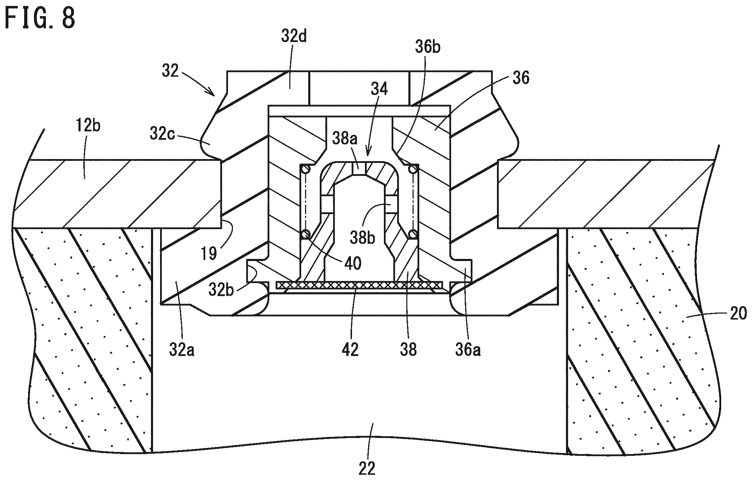

Next, a suction pad 30 according to a second embodiment of the present invention will be described with reference to FIGS. 7 and 8. In the suction pad 30 according to the second embodiment, constituent elements that are the same as or equivalent to those of the above-described suction pad 10 are denoted by the same reference numerals, and detailed description thereof is omitted.

The suction pad 30 is useful for sucking workpieces of various sizes including a workpiece having such a size that it covers only one or some of the plurality of cavities 22 of the sponge member 20. A flow passage adjustment valve 34 for adjusting a flow passage area in accordance with a suction state of the workpiece is arranged in a flow passage that connects each cavity 22 and the negative pressure chamber 16. The flow passage adjustment valve 34 is incorporated in each stopper 32. Hereinafter, the stopper 32 and the flow passage adjustment valve 34 will be described in detail.

The stoppers 32 are each made of a rubber material and formed in a tubular shape. A lower portion of each stopper 32 includes an annular first flange portion 32a on its outer periphery, and an annular groove portion 32b on its inner periphery. An upper portion of each stopper 32 includes an annular bulging portion 32c on its outer periphery, and a second flange portion 32d on its inner periphery. The stoppers 32 are respectively inserted into engagement holes 19 provided in the plate 12b of the body 12, and a portion of the plate 12b around each engagement hole 19 is held between the first flange portion 32a and the bulging portion 32c. As a result, the stoppers 32 are fixed to the plate 12b, and the lower portions of the stoppers 32 protrude downward from the plate 12b. The second flange portion 32d of each stopper 32 forms an air passage on the inner peripheral side thereof.

The flow passage adjustment valves 34 each include a tubular valve housing 36 and a tubular valve element 38. A lower portion of the valve housing 36 includes an annular flange portion 36a on its outer periphery. The flange portion 36a engages with the groove portion 32b of the stopper 32, whereby the valve housing 36 is fixed to the inside of the stopper 32. The valve element 38 is disposed inside the valve housing 36 and can be vertically displaced with respect to the valve housing 36. The valve housing 36 includes a tapered seat portion 36b against which a head part of the valve element 38 can abut. A spring 40 for biasing the valve element 38 downward is disposed between the valve housing 36 and the valve element 38. A regulating member 42 capable of abutting against a lower end of the valve element 38 is attached to the valve housing 36, and by the valve element 38 abutting against the regulating member 42, downward displacement of the valve element 38 is regulated. The regulating member 42 is formed in a mesh shape and has air permeability.

The head part of the valve element 38 includes an orifice 38a at its center, and a sidewall of the valve element 38 includes a plurality of openings 38b. The area of the opening 38b is sufficiently larger than the area of the orifice 38a. In a state where the head part of the valve element 38 is separated from the seat portion 36b of the valve housing 36, each cavity 22 of the sponge member 20 communicates with the negative pressure chamber 16 via the orifice 38a and the plurality of openings 38b of the valve element 38. In a state where the head part of the valve element 38 is in abutment against the seat portion 36b of the valve housing 36, each cavity 22 of the sponge member 20 communicates with the negative pressure chamber 16 only via the orifice 38a of the valve element 38.

When the cavity 22 of the sponge member 20 is closed by the workpiece, the flow passage area in the flow passage adjustment valve 34 is sufficiently increased, and the pressure in the cavity 22 becomes equal to the pressure in the negative pressure chamber 16. When the cavity 22 is not closed by the workpiece, the flow passage area in the flow passage adjustment valve 34 is sufficiently decreased, and high vacuum pressure is generated in the negative pressure chamber 16, while the pressure in the cavity 22 becomes substantially equal to the atmospheric pressure. This will be described in more detail below.

When vacuum pressure is generated in the negative pressure chamber 16 in a state where the cavity 22 is not closed by the workpiece, air passes through the orifice 38a of the valve element 38 from the lower side toward the upper side at a high flow velocity. Therefore, the valve element 38 is displaced upward by the pressure difference generated before and after the orifice 38a, and the head part of the valve element 38 abuts against the seat portion 36b of the valve housing 36. When the head part of the valve element 38 abuts against the seat portion 36b, the flow passage area decreases, and the flow velocity of the air passing through the orifice 38a further increases. As a result, the state where the head part of the valve element 38 is in abutment against the seat portion 36b of the valve housing 36 is reliably maintained.

When the cavity 22 is closed by the workpiece, the flow rate of the air passing through the orifice 38a of the valve element 38 decreases, and the flow velocity of the air passing through the orifice 38a decreases. Therefore, the pressure difference generated before and after the orifice 38a becomes small, the valve element 38 is displaced downward by the biasing force of the spring 40, and the head part of the valve element 38 moves away from the seat portion 36b of the valve housing 36. When the head part of the valve element 38 moves away from the seat portion 36b, the flow passage area increases.

The suction pad 30 can suck workpieces of various sizes. The pressure in the negative pressure chamber 16 of the body 12 does not increase even if the workpiece is small enough to contact only a part of the lower surface 24 of the sponge member 20 and one or some of the cavities 22 of the sponge member 20 are open to the atmosphere. That is, even if there is a cavity 22 which is not closed by the workpiece, the vacuum pressure generated in the negative pressure chamber 16 does not decrease due to the action of the flow passage adjustment valve 34.

In the suction pad 30 according to the present embodiment, since the stoppers 32 are disposed in the cavities 22 of the sponge member 20, the life of the sponge member 20 is improved, and the swing of the workpiece is suppressed even if acceleration acts on the workpiece. Further, since the flow passage adjustment valve 34 for adjusting the flow passage area in accordance with the suction state of the workpiece is incorporated in each stopper 32, the flow passage adjustment valve 34 can be easily and compactly disposed.

Although the valve element 38 according to the present embodiment includes the orifice 38a in the head part thereof, the valve element 38 may not include the orifice 38a in the head part thereof. In this case, when the head part of the valve element 38 abuts against the seat portion 36b of the valve housing 36, the cavity 22 of the sponge member 20 is shut off from the negative pressure chamber 16. Therefore, the amount of air flowing from the cavity 22 that is not closed by the workpiece toward the negative pressure chamber 16 becomes 0, and extremely high vacuum pressure is obtained in the negative pressure chamber 16 and the cavity 22 that is closed by the workpiece.

## Claims

1. A suction pad (10) comprising: a body (12); and a sponge member (20),
wherein the sponge member (20) includes a plurality of cavities (22) configured to open toward a workpiece,
a stopper (26) attached to the body (12) is disposed in each of the cavities (22) of the sponge member (20), a suction passage (28) formed in the stopper (26) communicates with a negative pressure chamber (16) formed in the body (12), **characterized in that**
the sponge member (20) is made of a material having a semi-open and semi-closed cell structure,
the stopper (26) has a tubular shape, and
a height of the stopper (26) is set to a dimension that prevents the sponge member (20) from being compressed to a maximum compression amount and allows the sponge member (20) to be compressed until the sponge member (20) exhibits airtightness.

2. The suction pad (10) according to claim 1, wherein
the height of the stopper (26) is about 13 % to 35 % of a length of each of the cavities (22) of the sponge member (20) in a state where no compressive force acts on the sponge member (20).

3. The suction pad (10) according to claim 1, wherein
the stopper (26) has a predetermined elasticity so as to weaken an impact when colliding with the workpiece.

4. The suction pad (10) according to claim 1, wherein
an outer diameter of the stopper (26) is about 80 % to 90 % of an inner diameter of each of the cavities (22) of the sponge member (20).

5. The suction pad (10) according to claim 1, wherein
a flow passage adjustment valve (34) configured to adjust a flow passage area is incorporated in the stopper (26), and when vacuum pressure is generated in the negative pressure chamber (16) and a cavity among the plurality of cavities (22) is not closed by the workpiece, the flow passage area corresponding to the cavity that is not closed by the workpiece is adjusted to be decreased.

## Patentansprüche

1. Saugnapf (10) mit: einem Körper (12); und einem Schwammteil (20),
wobei das Schwammteil (20) mehrere Hohlräume (22) aufweist, die so ausgebildet sind, dass sie sich zu einem Werkstück hin öffnen,
ein an dem Körper (12) befestigter Stopper (26) in jedem der Hohlräume (22) des Schwammelements (20) angeordnet ist,
ein in dem Stopper (26) ausgebildeter Saugkanal (28) mit einer in dem Körper (12) ausgebildeten Unterdruckkammer (16) in Verbindung steht,
**dadurch gekennzeichnet, dass**
das Schwammelement (20) aus einem Material mit einer halboffenen und halbgeschlossenen Zellstruktur besteht,
der Stopper (26) eine röhrenförmige Gestalt aufweist, und
eine Höhe des Stoppers (26) auf ein Maß eingestellt ist, das verhindert, dass das Schwammelement (20) auf ein maximales Kompressionsmaß komprimiert wird, und das Schwammelement (20) komprimiert werden kann, bis das Schwammelement (20) Luftdichtheit aufweist.

2. Saugnapf (10) nach Anspruch 1, wobei die Höhe des Stoppers (26) etwa 13 % bis 35 % einer Länge jedes der Hohlräume (22) des Schwammelements (20) in einem Zustand beträgt, in dem keine Druckkraft auf das Schwammelement (20) wirkt.

3. Saugnapf (10) nach Anspruch 1, wobei der Stopper (26) eine vorbestimmte Elastizität aufweist, um einen Aufprall beim Zusammenstoßen mit dem Werkstück abzuschwächen.

4. Saugnapf (10) nach Anspruch 1, wobei ein Außendurchmesser des Stoppers (26) etwa 80 % bis 90 % eines Innendurchmessers jedes der Hohlräume (22) des Schwammelements (20) beträgt.

5. Saugnapf (10) nach Anspruch 1, wobei ein Durchflussweg-Einstellventil (34) zum Einstellen eines Durchflusswegquerschnitts in den Stopper (26) integriert ist, und wenn in der Unterdruckkammer (16) ein Unterdruck erzeugt wird und einer der mehreren Hohlräume (22) nicht durch das Werkstück verschlossen ist, der Durchflusswegquerschnitt, der dem nicht durch das Werkstück verschlossenen Hohlraum entspricht, so eingestellt wird, dass er verringert wird.

## Revendications

1. Tampon d'aspiration (10) comprenant : un corps (12) ; et un élément en éponge (20),
dans lequel l'élément en éponge (20) inclut une pluralité de cavités (22) configurées pour s'ouvrir vers une pièce usinée,
un bouchon (26) attaché au corps (12) est disposé dans chacune des cavités (22) de l'élément en éponge (20), un passage d'aspiration (28) formé dans le bouchon (26) communique avec une chambre de pression négative (16) formée dans le corps (12),
**caractérisé en ce que**
l'élément en éponge (20) est constitué d'un matériau présentant une structure de cellules semi-ouvertes et semi-fermées,
le bouchon (26) présente une forme tubulaire,
une hauteur du bouchon (26) et ajustée à une dimension empêchant l'élément en éponge (20) d'être comprimé à une quantité de compression maximale et permettant à l'élément en éponge (20) d'être comprimé jusqu'à ce que l'élément en éponge (20) présente une étanchéité à l'air.

2. Tampon d'aspiration (10) selon la revendication 1, dans lequel
la hauteur du bouchon (26) mesure environ 13 % à 35 % d'une longueur de chacune des cavités (22) de l'élément en éponge (20) dans un état où aucune force de compression n'agit sur l'élément en éponge (20).

3. Tampon d'aspiration (10) selon la revendication 1, dans lequel
le bouchon (26) a une élasticité prédéterminée, de façon à alléger un impact lors d'une collision avec la pièce usinée.

4. Tampon d'aspiration (10) selon la revendication 1, dans lequel
un diamètre extérieur du bouchon (26) mesure environ 80 % à 90 % d'un diamètre intérieur de chacune des cavités (22) de l'élément en éponge (20).

5. Tampon d'aspiration (10) selon la revendication 1, dans lequel
une soupape de réglage de passage d'écoulement (34) configurée pour régler une aire de passage d'écoulement est incorporée dans le bouchon (26), et lorsqu'une pression de vide est générée dans la chambre de pression négative (16) et qu'une cavité parmi la pluralité de cavités (22) n'est pas fermée par la pièce usinée, l'aire de passage d'écoulement correspondant à la cavité non fermée par la pièce usinée est réglée de manière à être réduite.
